(19) Europäisches Patentamt
European Patent Office
Office européen des brevets

(11) Publication number: **0 063 194**
**B1**

(12) **EUROPEAN PATENT SPECIFICATION**

(45) Date of publication of patent specification: **10.04.85**

(51) Int. Cl.$^4$: **A 01 N 45/00**

(21) Application number: **81304789.1**

(22) Date of filing: **14.10.81**

(54) **Plant growth regulation.**

(30) Priority: **02.04.81 JP 50194/81**

(43) Date of publication of application:
**27.10.82 Bulletin 82/43**

(45) Publication of the grant of the patent:
**10.04.85 Bulletin 85/15**

(84) Designated Contracting States:
**DE FR GB**

(56) References cited:
**R.WEGLER: "Chemie der Pflanzenschutz-und Schädlings-bekämpfungsmittel", vol. 4, 1977, pages 18-23, Springer-Verlag Berlin, Heidelberg, New York.**

**MERCK INDEX, 9th Edition, 1976, page 1137, Merck & Co., Rahway (USA);**

(73) Proprietor: **Iwamura, Junichi**
**621-1 Ooazatakaida**
**Kashiwara-shi Osaka-fu (JP)**
(73) Proprietor: **GAKKO HOJIN KINKI DAIGAKU**
**3-4-1 Kowakae**
**Higashiosaka-shi Osaka-fu (JP)**
(73) Proprietor: **Komai, Koichiro**
**38 Yakushiyamahigashi-cho Oomiya Kita-ku**
**Kyoto-shi Kyoto-fu (JP)**

(72) Inventor: **Iwamura, Junichi**
**621-1 Ooazatakaida**
**Kashiwara-shi Osaka-fu (JP)**
Inventor: **Komai, Koichiro**
**38 Yakushiyamahigashi-cho Oomiya**
**Kita-ku Kyoto-shi Kyoto-fu (JP)**

(74) Representative: **Perry, Robert Edward et al**
**GILL JENNINGS & EVERY 53-64 Chancery Lane**
**London WC2A 1HN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 063 194 B1

## Description

The present invention relates to plant growth regulators and, in particular, to diterpene glucosides which can have plant growth-regulating properties.

Various gibberellins, including gibberellins $A_3$, $A_7$, $A_{30}$ and $A_{32}$, are known to have strong gibberellin-like activity. Gibberellin $A_3$ is of practical use as a plant growth promoter. These substances can promote the elongation of plants, but cause yellowing and prevent root growth at practical concentrations. In addition, they are not as soluble in water as might be desired, so that their effect is sometimes unsatisfactory.

Gibberelling glucosides have been reported as being materially inactive as plant growth regulators (A. Crozier *et al*, Can. J. Bot., 48, 867 (1970)).

It has now been found that certain diterpene glucosides can have utility as plant growth regulators. These diterpene glucosides have the formula

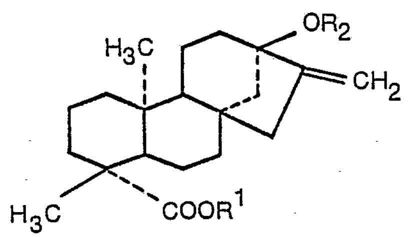

I

wherein either $R^1$ is hydrogen or a cation, preferably a metal cation, and $R^2$ is β-glucopyranosyl-(1-2)-β-glucopyranosyl or 2,3-di-O-(β-glucopyranosyl)-β-glucopyranosyl; or $R^1$ is β-glucopyranosyl and $R^2$ is α-rhamnopyranosyl-(1-2)-β-glucopyranosyl, β-glucopyranosyl-(1-2)-β-glucopyranosyl, 2,3-di-O-(β-glucopyranosyl)-β-glucopyranosyl or (3-O-β-glucopyranosyl)-(2-O-α-rhamnosyl-β-glucopyranosyl).

According to the present invention, a plant growth regulation method comprises applying a diterpene glucoside of formula I to a plant or to a plant growth locus. The plant may be in the form of seeds or a growing plant. The locus may be an area where seeds have been planted, where plants are growing, or where it is intended that plants will grow. One or more compounds of formula I may be used.

Diterpene glucosides of formula I are glucosides contained in stevia (*Stevia rebaudiana*). Such compounds, and their production, are disclosed by, for example, H. B. Wood *et al.*, J. Org. Chem., *20*, 875 (1955); H. Kohda *et al.*, Phytochemistry, *15*, 981 (1976); M. Kobayashi *et al.*, Phytochemistry, *16*, 1405 (1977); I. Sakamoto *et al.*, Chem. Pharm. Bull., *25*, 844 (1977); T. Morita *et al.*, Japanese Patent Publication No. 27226/1977; and J. Ueno *et al.*, Pharm. Soc. Japan, 96th Meeting, Summaries of Speeches, Vol. 2, 254 (1976).

Diterpene glucosides (I) may be extracted from the leaves of *Stevia rebaudiana*, followed, if necessary, by partial hydrolysis or conversion into salts. For instance, dried leaves of *Stevia rebaudiana* may be extracted with hot water, and the extract absorbed on resins having a molecular sieve effect (e.g. Amberlite XAD—2) previously washed with a polar solvent (e.g. methanol) and water. The resin is then washed with water to eliminate salts and low molecular weight compounds and eluted with a polar solvent (e.g. methanol). The eluate, containing diterpene glucosides, is concentrated, and the white or pale yellow, powdery residue is recrystallised or subjected to column chromatography to effect separation into the various diterpene glucosides.

Diterpene glucosides (I) wherein $R^1$ is hydrogen can be converted to the corresponding salts, particularly metal salts, by conventional procedures. Examples of preferred salts are alkali metal salts such as the sodium, potassium and lithium salts. These alkali metal salts are all water-soluble. Examples of other salts which may be used in the invention are alkaline earth metal salts such as calcium and magnesium salts.

Preferred diterpene glucosides (I) for use in the invention are steviorovioside (I: $R^1$ = hydrogen; $R^2$ = β-glucopyranosyl-(1-2)-β-glucopyranosyl) and its sodium or potassium salt, and stevioside (I: $R^1$ = β-glucopyranosyl; $R^2$ = β-glucopyranosyl-(1-2)-β-glucopyranosyl). Alternatively, an extract from stevia, optionally purified to an appropriate extent, may be used as such insofar as any of the diterpene glucosides (I) are included therein.

The diterpene glucosides (I) may be used as such in the method of the invention or in any conventional preparation form. The preparation may be solid or liquid, e.g. granules or a powder, solution, suspension or emulsion. It will often be preferred to include a surfactant in the preparation.

Examples of suitable solid carriers/diluents are vegetable materials (e.g. flour, tobacco stalk powder, soybean powder, walnut shell powder, wood powder, sawdust, bran, bark powder, cellulose powder and vegetable extract residue), fibrous materials (e.g. paper, corrugated cardboard and old rags), synthetic plastics powders, clays (e.g. kaolin, bentonite and fuller's earth), talc, other inorganic materials (e.g. pyrophyllite, sericite, pumice, sulfur powder and active carbon), and chemical fertilisers (e.g. ammonium sulfate, ammonium phosphate, ammonium nitrate, urea and ammonium chloride). Examples of suitable liquid carriers/diluents are water, alcohols (e.g. methanol and ethanol), ketones (e.g. acetone and methyl ethyl ketone), ethers (e.g. diethyl ether, dioxane, 2-ethoxyethanol and tetrahydrofuran), aromatic hydrocarbons (e.g. benzene, toluene, xylene and methylnaphthalenes), aliphatic hydrocarbons (e.g. petrol, kerosene and lamp oil), esters, nitriles, acid amides (e.g. dimethylformamide and dimethylacetamide), and halogenated hydrocarbons (e.g. dichloroethane and carbon tetrachloride). Examples of suitable surfactants are alkyl sulfuric esters, alkyl sulfonates, alkylaryl sulfonates, polyethylene glycol ethers and polyhydric alcohol esters.

Although no particular limitation is imposed on the concentration of the diterpene glucoside in the preparation, it will often be from 0.01 to 90% by weight. In use, the preparation may be diluted with water to give an appropriate concentration, preferably from 0.01 to 0.05% by weight, of the active ingredient. When desired, the preparation may comprise one or more active ingredients in addition to the diterpene glucoside, such as other plant growth regulators (e.g. gibberellins), herbicides, insecticides and fertilisers.

A diterpene glucoside (I) may be applied in substantially the same manner as has been adopted for conventional preparations comprising gibberellins. For instance, it may be applied by foliar treatment or soil treatment. It may be used for the treatment of seeds. Further, it may be added to a medium for liquid cultivation.

The plants for which the novel method can be used, are varied. They include fruits (e.g. grape, persimmon and strawberry), vegetables (e.g. lettuce, spinach, celery, coltsfoot, asparagus, tomato, cucumber and eggplant), petal plants (e.g. cyclamen, primula, summer chrysanthemum, Easter lily and tulip), and trees (e.g. cedar and cypress).

The method of the invention may be used, for example, for the following purposes:

For fruit: production of seedless fruits, acceleration of ripening, thickening of fruit, acceleration of growth of clusters, prevention of fruit drop and increase in number of fruits.

For vegetables: acceleration of growth, acceleration of thickening, release from dormancy, prevention of hollow fruit, thickening of fruit and yield increase.

For petal plants: acceleration of flowering, acceleration of height and release from dormancy.

For trees: acceleration of differentiation of floral buds.

The method and compositions of the invention are particularly useful, for example, for the following purposes:

(1) Control of the harvest time and the ripening period for fruits, particularly oranges;

(2) Acceleration of the growth of garden vegetables in soilless cultures such as pebble or water cultivation;

(3) Regulation of the flowering of petal plants;

(4) Regulation of the growth of gramineae plants, particularly rice plants, at the seedling period; and

(5) Simultaneous germination of herbs for their efficient extermination with herbicides.

The plant growth regulating effect of diterpene glucosides of formula I is illustrated in the following Examples.

### Example 1 (Promotion of growth)

Aqueous solutions of each test compound as shown in Table 1, having concentrations of 100, 200, 500 and 1,000 ppm, were prepared. In each of a number of 50 ml volume sample bottles (32 mm in diameter and 65 mm in height), 10 seeds of rice (*Oryzae sativa* L. var Tanginbozu) were arranged on a 32 mm diameter filter paper. An aqueous solution (2 ml) was added to each bottle. Cultivation was carried out in an incubator at 25°C with about 3,000 lux for 14 consecutive days, during which distilled water was supplied to each bottle when needed. The state of growth was judged by measurement of the height of the plant at the stem portion and calculation of the elongation percentage. The results are shown in Table 1.

In Table 1, "β-Glu" means β-glucopyranosyl and "α-rham" means α-rhamnopyranosyl. The "stevia extract" used as a Test compound contains steviorovioside (2%), stevioside (75%), stevioside $A_3$ (5%), surcoside A (2%) and rebaudioside C (3%). The percentages are by weight.

TABLE 1

(Elongation %)

| Test compound | | | Concentration (ppm) | | | | |
|---|---|---|---|---|---|---|---|
| | | | Control | Treated | | | |
| Name | $R^1$ | $R^2$ | 0 | 100 | 200 | 500 | 1000 |
| Steviorovioside | H | $-\beta-Glu\,{}^{2}-{}^{1}\beta-Glu$ | 100.0 | 125.2 | 134.6 | 143.1 | 137.1 |
| Steviorovioside sodium salt | Na | $-\beta-Glu\,{}^{2}-{}^{1}\beta-Glu$ | 100.0 | 176.3 | 187.6 | 197.3 | 188.8 |
| Steviorovioside potassium salt | K | $-\beta-Glu\,{}^{2}-{}^{1}\beta-Glu$ | 100.0 | 131.0 | 154.8 | 161.9 | 139.7 |
| Stevioside | $-\beta-Glu$ | $-\beta-Glu\,{}^{2}-{}^{1}\beta-Glu$ | 100.0 | 165.2 | 186.4 | 186.7 | 179.2 |
| Rebaudioside B | H | $-\beta-Glu\,{}^{2}-{}^{1}\beta-Glu$<br>$\backslash{}^{3}-{}^{1}\beta-Glu$ | 100.0 | 118.2 | 143.7 | 144.8 | 131.9 |
| Rebaudioside B sodium salt | Na | $-\beta-Glu\,{}^{2}-{}^{1}\beta-Glu$<br>$\backslash{}^{3}-{}^{1}\beta-Glu$ | 100.0 | 101.1 | 138.6 | 119.6 | 115.0 |
| Rebaudioside B potassium salt | K | $-\beta-Glu\,{}^{2}-{}^{1}\beta-Glu$<br>$\backslash{}^{3}-{}^{1}\beta-Glu$ | 100.0 | 85.6 | 97.3 | 119.0 | 121.3 |
| Stevioside $A_3$ | $-\beta-Glu$ | $-\beta-Glu\,{}^{2}-{}^{1}\beta-Glu$<br>$\backslash{}^{3}-{}^{1}\beta-Glu$ | 100.0 | 119.5 | 126.2 | 138.3 | 136.7 |
| Surcoside A | $-\beta-Glu$ | $-\beta-Glu\,{}^{2}-{}^{1}\alpha-Rham$ | 100.0 | 107.5 | 126.7 | 130.3 | 128.5 |
| Rebaudioside C | $-\beta-Glu$ | $-\beta-Glu\,{}^{2}-{}^{1}\alpha-Rham$<br>$\backslash{}^{3}-{}^{1}\beta-Glu$ | 100.0 | 114.6 | 121.1 | 135.7 | 144.8 |
| Stevia extract | | | 100.0 | 133.2 | 149.1 | 145.4 | 143.4 |

Example 2 (Acceleration of blooming)

To the clusters of ume trees (*Prunus mume* Sieb. et Zucc.), 5 years old, and of Ginchoge (*Daphne japonica* Thunb.), 5 years old, a 500 ppm aqueous solution of stevioside was sprayed to an extent that their surfaces were slightly wetted. After 20 days, the number of the bloomed flowers was counted, and the blooming percentage was calculated. The results are shown in Table 2.

TABLE 2

| Plant | Blooming (%) | |
|---|---|---|
| | Control | Treated |
| Ume tree | 0.8 | 9,1 |
| Ginchoge | 3.8 | 42.1 |

Example 3 (Release from dormancy and promotion of germination)

In a Petri dish 3 cm in diameter, 20 seeds of Yaemugura (*Galium aparine* L.) were placed, and 3 ml of an aqueous solution of stevioside having a concentration of 100, 500 or 1,000 ppm was added thereto. Cultivation was carried out in an incubator at 10°C with about 1,500 lux for 21 consecutive days, during which distilled water was supplied thereto when needed. The number of the germinated seeds was counted, and the germination percentage was calculated.

For comparison, a control experiment, in which no diterpene glucoside was added, was also conducted. The results are shown in Table 3. In the cases in which stevioside was used, marked effects on root growth and germination acceleration were observed.

TABLE 3

| Concentration (ppm) | | Germination (%) |
|---|---|---|
| Control | 0 | 20 |
| Treated | 100 | 35 |
| | 500 | 34 |
| | 1000 | 50 |

Example 4 (Yellowing and root growing)

The same test with rice (*Oryzae sativa* L. var Tanginbozu) as in Example 1 was carried out. On macroscopic observation, no yellowing as produced in the use of gibberellins was observed at any tested concentration of any test compound.

Further, in the case of using stevioside, the percentage of root growth determined by measuring the length of root and comparing the measured length with that in the control group (taken as 100) was as shown in Table 4, from which it is understood that there is no gibberellin-like root growth prevention.

TABLE 4

| Concentration (ppm) | | Root growth (%) |
|---|---|---|
| Control | 0 | 100 |
| Treated | 100 | 147.7 |
| | 200 | 203.3 |
| | 500 | 118.5 |
| | 1000 | 103.0 |

**Claims**

1. A plant growth regulation method, which comprises applying, to a plant or to a plant growth locus, a diterpene glucoside of the formula

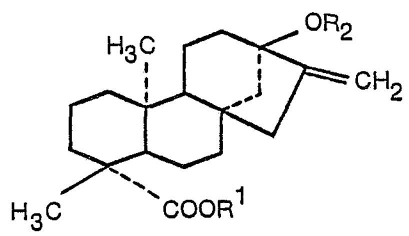

wherein either $R^1$ is hydrogen or a cation and $R^2$ is β-glucopyranosyl-(1-2)-β-glucopyranosyl or 2,3-di-O-(β-glucopyranosyl)-β-glucopyranosyl; or $R^1$ is β-glucopyranosyl and $R^2$ is α-rhamnopyranosyl-(1-2)-β-glucopyranosyl, β-glucopyranosyl-(1-2)-β-glucopyranosyl, 2,3-di-O-(β-glucopyranosyl)-β-glucopyranosyl or (3-O-β-glucopyranosyl)-(2-O-α-rhamnosyl-β-glucopyranosyl).

2. A method according to claim 1, which comprises applying the diterpene glucoside to the plant.

3. A method according to claim 1, which comprises applying the diterpene glucoside to the seeds of the plant.

4. A method according to claim 1, which comprises applying the diterpene glucoside to the area where the plant is growing or will grow.

5. A method according to any preceding claim, in which the diterpene glucoside is applied in the form of a composition additionally comprising an agriculturally acceptable carrier or diluent.

6. A method according to claim 5, in which the composition comprises from 0.01 to 95% by weight of the diterpene glucoside.

7. A method according to claim 5 or claim 6, in which the composition comprises the diterpene glucoside dissolved or dispersed in an aqueous medium.

8. A method according to any of claims 5 to 7, in which the composition comprises a surfactant.

**Revendications**

1. Un procédé de régulation de la croissance des plantes, qui comprend l'application à une plante ou à son emplacement de croissance, d'un diterpène-glucoside de formule

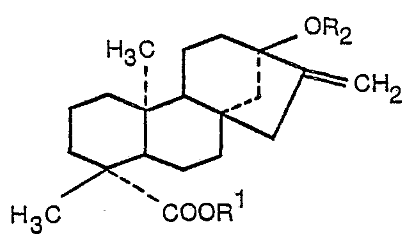

dans laquelle ou bien $R^1$ est l'hydrogène ou un cation et $R^2$ est un groupe β-glucopyrannosyl-(1-2)-β-glucopyrannosyle ou 2,3-di-O-(β-glucopyrannosyl)-β-glucopyrannosyle, ou bien $R^1$ est un groupe β-glucopyrannosyle et $R^2$ est un groupe α-rhamnopyrannosyl-(1-2)-β-glucopyrannosyle, β-glucopyrannosyl-(1-2)-β-glucopyrannosyle, 2,3-di-O-(β-glucopyrannosyl)-β-glucopyrannosyle ou (3-O-β-glucopyrannosyl)-(2-O-α-rhamnosyl-β-glucopyrannosyle).

2. Un procédé selon la revendication 1, qui consiste à appliquer le diterpène-glucoside à la plante.

3. Un procédé selon la revendication 1, qui consiste à appliquer le diterpène-glucoside aux graines de la plante.

4. Un procédé selon la revendication 1, qui consiste à appliquer le diterpène-glucoside dans la zone où la plante pousse ou poussera.

5. Un procédé selon l'une quelconque des revendications précédentes, dans lequel le diterpène-glucoside est appliqué sous la forme d'une composition comprenant en outre un support ou diluant acceptable en agriculture.

6. Un procédé selon la revendication 5, dans lequel la composition comprend de 0,01 à 95% en poids du diterpène-glucoside.

7. Un procédé selon la revendication 5 ou la revendication 6, dans lequel la composition comprend le diterpène-glucoside dissous ou dispersé dans un milieu aqueux.

8. Un procédé selon l'une quelconque des revendications 5 à 7, dans lequel la composition comprend un tensioactif.

**Patentansprüche**

1. Verfahren zur Regulierung von Pflanzenwachstum, dadurch gekennzeichnet, daß auf eine Pflanze oder den Ort des Pflanzenwachstums ein Diterpenglucosid der Formel

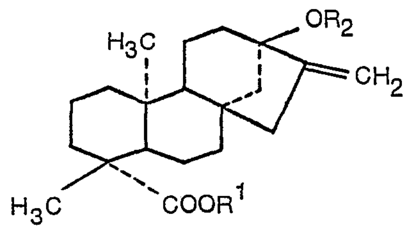

zur Einwirkung gebracht wird, in der entweder $R^1$ Wasserstoff oder ein Kation ist und $R^2$ β-Glucopyranosyl-(1-2)-β-glucopyranosyl oder 2,3-Di-O-(β-glucopyranosyl)-β-glucopyranosyl ist oder $R^1$ β-Glucopyranosyl ist und $R^2$ α-Rhamnopyranosyl-(1-2)-β-glucopyranosyl, β-Glucopyranosyl-(1-2)-β-glucopyranosyl, 2,3-Di-O-(β-glucopyranosyl)-β-glucopyranosyl oder (3-O-β-Glucopyranosyl)-(2-O-α-rhamnosyl-β-glucopyranosyl) ist.

2. Verfahren nach Anspruch 1, dadurch gekennzeichnet, daß das Diterpenglucosid auf die Pflanze aufgebracht wird.

3. Verfahren nach Anspruch 1, dadurch gekennzeichnet, daß das Diterpenglucosid auf die Samen der Pflanze aufgebracht wird.

4. Verfahren nach Anspruch 1, dadurch gekennzeichnet, daß das Diterpenglucosid auf die Fläche, auf der die Pflanze wächst oder wachsen wird, aufgebracht wird.

5. Verfahren nach irgendeinem der vorhergehenden Ansprüche, dadurch gekennzeichnet, daß das Diterpenglucosid in Form einer Zusammensetzung aufgebracht wird, die zusätzlich ein landwirtschaftlich unbedenkliches Trägermaterial oder Verdünnungsmittel enthält.

6. Verfahren nach Anspruch 5, dadurch gekennzeichnet, daß die Zusammensetzung 0,01 bis 95 Gew.-% des Diterpenglucosids enthält.

7. Verfahren nach Anspruch 5 oder Anspruch 6, dadurch gekennzeichnet, daß die Zusammensetzung das Diterpenglucosid in einem wäßrigen Medium gelöst oder dispergiert enthält.

8. Verfahren nach irgendeinem der Ansprüche 5 bis 7, dadurch gekennzeichnet, daß die Zusammensetzung ein oberflächenaktives Mittel enthält.